# EUROPÄISCHE PATENTSCHRIFT

(11) **EP 0 574 677 B1**
(45) Veröffentlichungstag und Bekanntmachung des Hinweises auf die Patenterteilung: **06.12.1995**
(21) Anmeldenummer: 93106685.6
(22) Anmeldetag: 24.04.1993
(51) Int. Cl.: F16K 17/38

(54) **Sicherheitsgassteckdose**
Safety gas outlet
Raccord de gaz de sécurité

(30) Priorität: 19.06.1992 DE 4220054
(43) Veröffentlichungstag der Anmeldung: 22.12.1993
(73) Patentinhaber: Paul Isphording Metallwerke GmbH. & Co. KG, D-57439 Attendorn (DE)
(72) Erfinder: Keine, Ulrich, W-5952 Attendorn-Repe (DE); Sömer, Heinz, W-5940 Lennestadt 11 (DE)
(74) Vertreter: COHAUSZ HASE DAWIDOWICZ & PARTNER

(56) Entgegenhaltungen:
- EP-A- 0 343 615
- EP-A- 0 364 906
- DE-B- 1 019 879
- GB-A- 694 138
- GB-A- 964 835
- GB-A- 2 209 200
- MACHINE DESIGN Bd. 46, Nr. 8, 4. April 1974, Seite 39 'heat opens check valve'

## Beschreibung

Die Erfindung betrifft eine Sicherheitsgassteckdose. Bei früheren Konstruktionen von Gassteckdosen konnte im Brandfall nach Schmelzen der Dichtungen im Inneren der Gassteckdose bzw. nach Beschädigung des Gasschlauches Gas unkontrolliert ausströmen und zu schwerwiegenden Folgen führen. Die neue DIN-Norm 3383 schreibt deshalb eine thermische Prüfung der Gassteckdose vor, wonach bei einer Umgebungstemperatur von 650 Grad und einer Dauer von 30 Minuten max. 150 L/h nach außen ausströmen darf.

Aus der GB 2 209 200 A ist ein Sicherheitsventil bekannt, bei dem ein Haltering in einer Nut einliegt, der im strömungsfreien Normalzustand das Schließteil gegen die Kraft einer Vorspannfeder in der geöffneten Stellung hält. Bei einer Erwärmung der Vorspannfeder dehnt diese sich aus und übt eine immer stärker werdende Kraft aus, durch die nach Überschreiten einer Grenztemperatur das Schließteil in die geschlossene Stellung bewegt wird.

Ein weiteres thermisches Sicherheitsventil ist aus der EP 03 64 906 bekannt. Das Sicherheitsventil hat einen Drehschieber zum Absperren der Gaszufuhr, wobei innerhalb des Gehäuses ein Haltering in einer Nut einliegt, in oder an dem ein zylindrisches Schließteil anliegt, dessen größter Außendurchmesser nur geringfügig größer ist sld der Innendurchmesser des Halterings, und wobei das Schließteil durch ein Federelement gegen den Haltering in Richtung eines Dichtsitzes gedrückt ist. Steigt die Umgebungstemperatur über einen gewissen Wert, so schmilzt der Haltering und das Schließteil wird durch das Federelement in die Schließposition verstellt.

Ventile der vorangehend beschriebenen Art unterscheiden sich von Sicherheitsgassteckdosen dadurch, daß bei ihnen das mit der lösbaren Befestigung eines flexiblen Schlauches verbundene besondere Abdichtungsproblem nicht besteht. Daher kann die bei den bekannten Ventilen verwendete Konstruktion zum Verriegeln des Ventils bei einer übermäßigen Erwärmung nur unter Schwierigkeiten auf die Konstruktion einer Sicherheitsgassteckdose übertragen werden. Darüber hinaus weist das aus der GB 2 209 200 A bekannte Sicherheitsventil den Nachteil auf, daß zum Einrücken des Schließgliedes in die geschlossene Stellung der Haltering aus seiner Nut gezogen werden muß. Dabei besteht die Gefahr des Verkantens des Halterings im Bereich der Nut. Dies kann dazu führen, daß das Schließglied ebenfalls verklemmt, so daß ein ordnungsgemäßes automatisches Verschließen des Ventils bei einer Überhitzung nnicht gewährleistet ist.

Neben dem vorangehend erläuterten Sicherheitsventil ist aus der europäischen Patentanmeldung EP 0 343 615 A1 eine Gasanschlußarmatur bekannt, bei der ein automatisches Verschließen der Gaszufuhr bei der Gefahr einer Überhitzung durch einen Schmelzkörper bewirkt wird. Im Normalbetrieb hält der Schmelzkörper das Schließglied gegen die Kraft einer Feder in der geöffneten Stellung und schmilzt bei einer übermäßigen Erhitzung auf, so daß dann das Schließglied vor die Gaszufuhröffnung bewegt wurd. Durch die Verwendung eines Schmelzkörpers ist die Gefahr eines Verklemmens des Schließgliedes bei der bekannten Gasanschlußarmatur gemindert. Der Nachteil der bekannten Armatur besteht jedoch darin, daß ein empfindliches Spezialauteil benötigt wird, um die erforderliche Sicherheit zu gewährleisten.

Aufgabe der Erfindung ist es, eine Sicherheitsgassteckdose zu schaffen, die bei einfacher Konstruktion und Montage ohne tiefgreifende konstruktive Veränderungen der thermischen Prüfung nach DIN 3383 standhält.

Diese Aufgabe wird erfindungsgemäß durch die Merkmale des Anspruchs 1 gelöst.

Eine solche Sicherheitsgassteckdose besitzt eine hohe Funktionssicherheit bei wenigen Teilen, einfacher Konstruktion und geringen Außenabmessungen. Durch Verwendung unterschiedlicher Werkstoffe für den Haltering ist die Auslösetemperatur auf das einfachste variabel gestaltbar. Aufgrund der Form des Schließteils wurd ein Verkanten nach dem Auslösen sicher verhindert.

Die thermische Sicherheitseinrichtung, bestehend aus dem Schließteil, dem Federelement, dem Haltering und den den Druck auf das Schließteil ausübenden Teilen bilden zusammen mit dem Drehschieber eine Einheit, die auf einfachste Weise in das Innere des Gehäuses eingeschoben werden kann.

Besonders vorteilhaft ist es, wenn der Haltering im Inneren des Drehschiebers befestigt ist. Von größtem Vorteil ist es, wenn das Schließeil eine Kugel, ein Kegel oder ein Kegelstumpf ist. Als Material für den Haltering hat sich besonders Polytetrafluorethylen (= PTFE) bewährt.

Vorzugsweise wird vorgeschlagen, daß das Federelement eine Schraubendruckfeder ist. Von besonderem Vorteil ist es, wenn Haltering, Schließteil, Federelement und Federelementlager im Inneren des Drehschiebers angeordnet sind.

Zur Verbesserung der äußeren Dichtheit wird vorgeschlagen, daß zwischen Drehschieber und Gehäuse ein Sicherheitsdichtring aus Reingraphit angeordnet ist. Hierdurch wird eine zusätzliche, temperaturresistente Dichtung geschaffen.

Ein Ausführungsbeispiel der Erfindung ist in den Zeichnungen dargestellt und wird im folgenden näher beschrieben. Es zeigen:

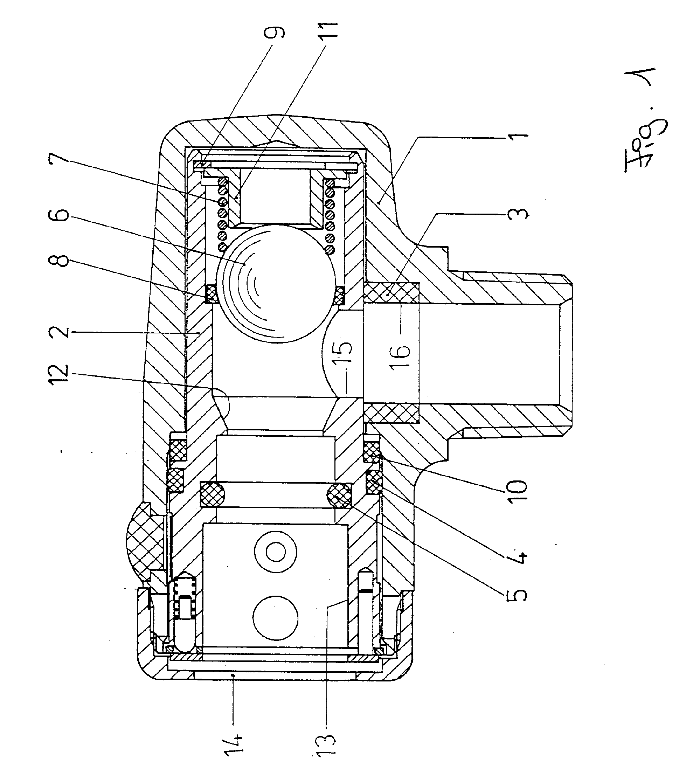

- Figur 1:: Einen axialen Schnitt durch die Sicherheitsgassteckdose im noch nicht ausgelösten Zustand und

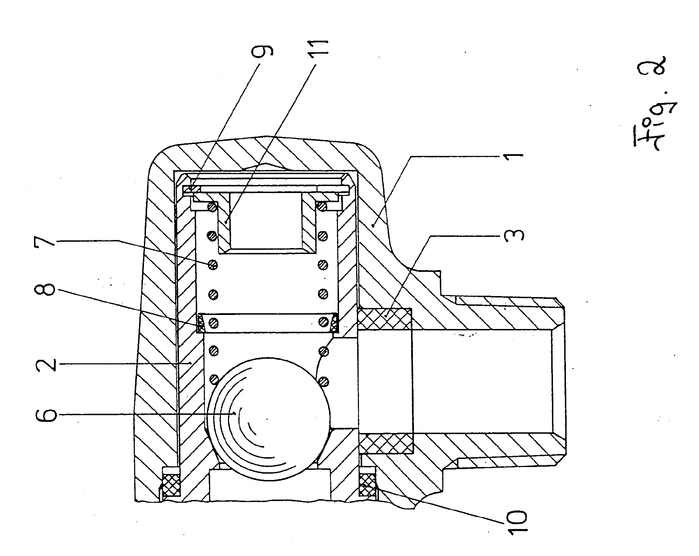

- Figur 2:: einen Ausschnitt aus Figur 1 im ausgelösten Zustand.

In einem Gehäuse 1 ist ein rohrförmiger Drehschieber 2 um seine Längsachse drehbar gelagert. Der Drehschieber 2 weist auf einer Stirnseite eine Öffnung 13 auf, die mit einer Öffnung 14 im Gehäuse 1 übereinstimmt, durch die ein Gasstecker, der am Ende eines Schlauches befestigt ist, lösbar eingesteckt werden kann. Durch Verdrehen des nicht dargestellten Gassteckers um seine Längsachse wird der Drehschieber 2 um seine Längsachse drehverstellt,wobei in einer ersten Stellung ene seitliche Öffnung 15 im Drehschieber übereinstimmt mit einer Öffnung 16 im Gehäuse 1. Diese Öffnung 16 ist von einer Dichtung 3 umgeben, die zur Außenseite des Drehschiebers 2 hin seitlich am Gehäuse 1 vorsteht und an der die Gaszuführungsleitung anschließbar ist. In einer zweiten Drehstellung verschließt der Drehschieber 2 die Öffnung 16.

In dem der Öffnung 13 abgewandten Ende des Drehschiebers 2 ist eine Buchse 11 durch einen Sicherungsring 9 befestigt.

Auf der Außenseite der Buchse 11 ist eine Schraubendruckfeder als Federelement 7 koaxial gelagert, die an einer Kugel anliegt, die ein Schließteil 6 bildet. Das Schließteil 6 liegt in einem Haltering 8, wobei der Innendurchmesser des Halterings 8 etwas kleiner gewählt ist als der Außendurchmesser des Schlißteils 6, so daß trotz des Druckes des Federelements 7 das Schließteil 6 in der der Buchse 11 nahen Stellung verbleibt.

Der Haltering 8 besteht aus einem Material, insbesondere aus kunststoff oder einem Metall, insbesonder Lot, das bei einer vorgewählten, bestimmten Temperatur, insbesondere bei 650 Grad soweit erweicht, daß das Schließteil durch das Federelement 7 durch den Haltering 8 hindurchgedrückt wird und in den Dichtsitz 12 gelangt und dort abdichtend anliegt. Da der Dichtsitz 12 sich zwischen den Öffnungen 15, 16 bzw. dem Einlaßstutzen und dem Gasstecker, bzw. den Öffnungen 13, 14 befindet, wird durch ein Einliegen des Schließteils 6 im Dichtsitz der Gasstrom gesperrt.

Statt einer Kugel als Schließteil 6 kann auch ein anders geformtes drehsymmetrisches Schließteil, insbesondere ein Kegel oder Kegelstumpf verwendet werden.

Während die außen am Drehschieber 2 angeordneten Dichtungen 3 und 4, also auch die im Drehschieber angeordneten Dichtungen für den Gasstecker, aus üblichen, weitgehend wärmebeständigen Materialien bestehen, ist ene weitere äußere Dichtung in Form des Sicherheitsdichtringes 10 um den Drehschieber herum nahe der Dichtung 3 angeordnet, die bei thermischer Belastung für die nötige äußere Dichtung sorgt und aus Reingraphit besteht. Diese Dichtung ist auch dann noch dicht, wenn die übrigen Dichtungen, insbesondere aus NBR, geschmolzen sind.

## Patentansprüche

1. Sicherheitsgassteckdose mit einem Gehäuse (1), an dem der Stecker eines Gasschlauches anschließbar ist, und mit den folgenden Merkmalen:
- am Gehäuse (1) befindet sich ein Drehschieber (2) zum Absperren der Gaszufuhr,
- innerhalb des Gehäuses (1) ist ein Haltering (8) gelagert, in oder an dem ein drehsymmetrisches Schließteil (6) anliegt, dessen größter Außendurchmesser nur wenig größer ist, als der Innendurchmesser des Halterings (8),
- das Schließteil (6) ist durch ein Federelement (7) gegen den Haltering (8) in Richtung eines Dichtsitzes gedrückt, welcher durch das Schließteil (6) verschließbar ist,
- der Haltering (8) ist durch Wärmeeinwirkung so weit aufweitbar, daß das Schließteil (6) durch das Innere des Halterings (8) hindurchtritt,
- das Schließteil ist eine Kugel, ein Kegel oder ein Kegelstumpf und
- der Haltering (8) ist im Inneren des Drehschiebers (2) befestigt.

2. Sicherheitsgassteckdose nach Anspruch 1,
**dadurch gekennzeichnet**, daß der Haltering aus Polytetrafluorethylen (PTFE) ist.

3. Sicherheitsgassteckdose nach einem der vorherigen Ansprüche, **dadurch gekennzeichnet,** daß das Federelement (7) eine Schraubenfeder ist.

4. Sicherheitsgassteckdose nach einem der vorherigen Ansprüche, **dadurch gekennzeichnet,** daß Schließteil (6) und Federelementlager (11) im Inneren des Drehschiebers (2) angeordnet sind.

5. Sicherheitsgassteckdose nach einem der vorherigen Ansprüche, **dadurch gekennzeichnet,** daß zwischen Drehschieber (2) und Gehäuse (1) ein Sicherheitsdichtring (10) aus Reingraphit angeordnet ist.

## Claims

1. A safety gas outlet having a casing (1) to which the plug-in element of a flexible gas tube can be connected, the outlet having the following features:
- disposed in the casing (1) is a rotary slide valve (2) for cutting off the gas supply,
- mounted inside the casing (1) is a retaining ring (8) in or against which an axially symmetric closure member (6) bears whose maximum external diameter is only slightly larger than the internal diameter of the retaining ring (8),
- the closure member (6) is forced by a spring element (7) against the retaining ring (8) in the direction of a sealing seat which can be closed by the closure member (6),
- the retaining ring (8) can be opened up by heat to such an extent that the closure member (6) passes through the inside of the retaining ring (8),
- the closure member is a ball, cone or frustrum, and
- the retaining ring (8) is attached inside the rotary slide valve (2).

2. A safety gas outlet according to claim 1, **characterized in that** the retaining ring is made of polytetrafluoroethylene (PTFE).

3. A safety gas outlet according to one of the preceding claims, **characterized in that** the spring element (7) is a helical spring.

4. A safety gas outlet according to one of the preceding claims, **characterized in that** the closure member (6) and the spring element bearing (11) are disposed in the inside of the rotary slide valve (2).

5. A safety gas outlet according to one of the preceding claims, **characterized in that** a safety sealing ring (10) of pure graphite is disposed between the rotary slide valve (2) and the casing (1).

## Revendications

1. Raccord enfichable de sécurité pour le gaz avec un carter (1) auquel peut être raccordé le raccord d'un tuyau à gaz et avec les caractéristiques suivantes :
- un tiroir rotatif (2) pour fermer l'alimentation en gaz se trouve dans le carter (1),
- un anneau de blocage (8), dans ou sur lequel est en appui une pièce de fermeture (6) symétrique en rotation, dont le plus grand diamètre extérieur n'est pas que légèrement plus grand que le diamètre intérieur de l'anneau de blocage (8), est monté à l'intérieur du carter (1),
- la pièce de fermeture (6) est pressée par un élément à ressort (7) contre l'anneau de blocage (8) en direction d'un siège d'étanchéité qui peut être obturé par la pièce de fermeture (6),
- l'anneau de blocage (8) peut être suffisamment élargi sous l'action de la chaleur pour que la pièce de fermeture (6) passe à travers l'intérieur de l'anneau de blocage (8),
- la pièce de fermeture est une bille, un cône ou un tronc de cône et
- l'anneau de blocage (8) est fixé dans l'intérieur du tiroir rotatif (2).

2. Raccord enfichable de sécurité pour le gaz selon la revendication 1,
caractérisé en ce que l'anneau de blocage est en polytétrafluoréthylène (PTFE).

3. Raccord enfichable de sécurité pour le gaz selon l'une des revendications précédentes,
caractérisé en ce que l'élément à ressort (7) est un ressort à boudin.

4. Raccord enfichable de sécurité pour le gaz selon l'une des revendications précédentes,
caractérisé en ce que la pièce de fermeture (6) et une portée (11) d'élément à ressort sont disposées dans l'intérieur du tiroir rotatif (2).

5. Raccord enfichable de sécurité pour le gaz selon l'une des revendications précédentes,
caractérisé en ce qu'une bague d'étanchéité de sécurité (10) en graphite pur est disposée entre le tiroir rotatif (2) et le carter (1).
